# EUROPÄISCHE PATENTSCHRIFT

(11) **EP 2 837 950 B1**
(45) Veröffentlichungstag und Bekanntmachung des Hinweises auf die Patenterteilung: **04.05.2016**
(21) Anmeldenummer: 13180386.8
(22) Anmeldetag: 14.08.2013
(51) Int. Cl.: G01S 13/88, G01F 23/284, G01F 23/296, G01F 23/292, H01Q 15/08, G01S 13/42

(54) **Radar-Strahlablenkungseinheit für ein Füllstandradar**
Radar beam deflection unit for a fill level radar
Unité de déviation de faisceau radar pour un radar de niveau de remplissage

(43) Veröffentlichungstag der Anmeldung: 18.02.2015
(73) Patentinhaber: VEGA Grieshaber KG, 77709 Wolfach (DE)
(72) Erfinder: Dieterle, Levin, 77709 Oberwolfach (DE)
(74) Vertreter: Maiwald Patentanwalts GmbH

(56) Entgegenhaltungen:
- EP-A1- 2 090 387
- DE-A1- 3 015 006
- DE-T1- 71 426
- US-A- 4 322 627

## Beschreibung

### Gebiet der Erfindung

Die Erfindung betrifft die Füllstandmessung. Insbesondere betrifft die Erfindung eine Radar-Strahlablenkungseinheit für ein Füllstandradar, ein Messgerät mit einer Radar-Strahlablenkungseinheit, die Verwendung eines solches Messgeräts zur Bestimmung eines Volumenstroms eines Schüttguts, die Verwendung eines solchen Messgeräts zur Bestimmung der Masse eines Schüttguts sowie ein Verfahren zum Bestimmen der Topologie eines Schüttguts.

### Technischer Hintergrund

Schüttgüter, die in einem Behälter gespeichert sind, sich auf einem Förderband befinden oder auf einer Halde liegen, weisen im Regelfall eine unregelmäßige, unebene Oberfläche auf. Insbesondere kann es zur Ausbildung eines Schüttkegels oder eines Abzugstrichters kommen.

Füllstandmessgeräte bestimmen in dieser Situation den Füllstand oft ungenau, insbesondere wenn lediglich die Entfernung zu einem einzigen Punkt an der Füllgutoberfläche bestimmt wird. Um den Füllstand mit höherer Genauigkeit bestimmen zu können, kann es von Vorteil ein, Kenntnisse über die Topologie der Füllgutoberfläche heranzuziehen.

Zur Erfassung der Topologie einer Oberfläche eines Füllguts mit einem Füllstandradar kann vorgesehen sein, die Hauptstrahlrichtung der Antenne zu verändern. Durch sukzessive Veränderung der Hauptstrahlrichtung ist es möglich, die Oberfläche eines Mediums aus verschiedenen Winkelrichtungen bzw. von verschiedenen Positionen auszumessen. Mittels der erfassten Echokurven ist es möglich, die Topologie der Oberfläche im Messgerät oder einer geeigneten Auswerteeinrichtung zu bestimmen.

Die benötigte Veränderung der Hauptstrahlrichtung kann mechanisch durch Schwenken oder Verschieben der Antenne erfolgen. Auch ist es möglich, ein Antennenarray vorzusehen, das Echokurven aus verschiedenen Raumrichtungen erfasst.

DE 101 06 176 A1 beschreibt eine Füllstandmessvorrichtung mit einem ausrichtbaren Messkopf.

DE 689 10 784 T2 beschreibt eine Antenne mit elektronisch gesteuerter Ablenkung.

DE 30 15 006 A1 beschreibt ein Verfahren und eine Anordnung zum Registrieren der Topographie für die Charge in einem Hochofen. Dabei wird die Entfernung zwischen dem Entfernungsmesser und der Chargenoberfläche anhand der an der Chargenoberfläche reflektierten Messstrahlung gemessen.

EP 2 090 387 A1 beschreibt eine verfahren und eine Vorrichtung zur Überwachung der Oberflächen von Schlacke und geschmolzenen Metall in einer Gießform.

### Zusammenfassung der Erfindung

Es ist eine Aufgabe der Erfindung, die Bestimmung einer Füllguttopologie mit alternativen Maßnahmen zu ermöglichen.

Gemäß einem ersten Aspekt der Erfindung ist eine Radar-Strahlablenkungseinheit für ein Füllstandradar angegeben, welche zum gesteuerten Ablenken einer Hauptabstrahlrichtung eines Sendesignals des Füllstandradars ausgeführt ist. Die Radar-Strahlablenkungseinheit weist zumindest ein erstes Strahlablenkungselement zum Ablenken der Hauptabstrahlrichtung des Sendesignals auf. Beispielsweise handelt es sich hierbei um ein Prisma. Weiter ist ein erster Antrieb vorgesehen, der zum Rotieren des ersten Strahlablenkungselements um eine erste Rotationsachse ausgeführt ist, so dass die Hauptabstrahlrichtung des Sendesignals nach Durchlaufen des ersten Strahlablenkungselements durch die Rotation des ersten Strahlablenkungselements auf einer geschlossenen Bahn umläuft. Beispielsweise handelt es sich bei der geschlossenen Bahn um eine Kreisbahn.

Gemäß einer Ausführungsform der Erfindung ist neben dem ersten Strahlablenkungselement ein zweites Strahlablenkungselement zum Ablenken der Hauptabstrahlrichtung des Sendesignals vorgesehen. Auch bei dem zweiten Strahlablenkungselement kann es sich um ein Prisma handeln.

Unter dem Begriff "Prisma" ist ein für das Sendesignal zumindest teilweise transparenter Körper zu verstehen, der zwei Oberflächen aufweist, die zueinander einen Winkel einschließen und durch welche das Sendesignal auf seinem Weg vom Füllstandradar zum Füllgut hindurchzutreten hat. Auf seinem Weg durch das Strahlablenkungselement wird es somit durch diese beiden Oberflächen zumindest einmal gebrochen, so dass sich die Hauptabstrahlrichtung ändert.

Wird nun das erste oder das zweite Strahlablenkungselement mit Hilfe seines Antriebs um dessen Hauptachse rotiert, beschreibt somit die Hauptabstrahlrichtung des Sendesignals nach Durchlaufen der Strahlablenkungselemente eine geschlossene Bahn.

Zur Rotation des zweiten Strahlablenkungselements ist ein zweiter Antrieb vorgesehen. Es können somit beide Antriebe aktiviert werden, wodurch beide Prismen gleich- oder gegenläufig rotiert werden.

Beispielsweise fallen die Rotationsachsen des ersten Prismas und die des zweiten Prismas zusammen. Durch geeignete Orientierung der Flächen der beiden Prismen zueinander und geeigneter Einstellung der Rotationsgeschwindigkeit und -richtung kann sich die Hauptabstrahlrichtung des Sendesignals auf einer spiralförmigen Bahn oder beispielsweise einer blütenförmigen Bahn bewegen.

Gemäß einer weiteren Ausführungsform der Erfindung kann ein dritter Antrieb vorgesehen sein, um die beiden Prismen um eine dritte Rotationsachse zu rotieren, die senkrecht auf der ersten und der zweiten Rotationsachse steht.

Gemäß einer weiteren Ausführungsform der Erfindung weist das erste Strahlablenkungselement eine erste optisch wirksame Oberfläche und eine zweite optisch wirksame Oberfläche auf, die einen Winkel zueinander einschließen, der die Ablenkung der Hauptabstrahlrichtung des Sendesignals bestimmt, so wie dies von einem Prisma bekannt ist.

Insbesondere können der erste Antrieb und der zweite Antrieb als mechanisch gekoppelter Gesamtantrieb ausgeführt sein. Es kann ein entsprechendes Getriebe vorgesehen sein, welches das Verhältnis der Rotationsfrequenz des ersten Prismas zur Rotationsfrequenz des zweiten Prismas einstellt.

Gemäß einer weiteren Ausführungsform der Erfindung weisen die Strahlablenkungselemente Encoder auf, welche zumindest die relativen Positionen der Elemente erfassen.

Insbesondere kann die Positionsbestimmung der Strahlablenkungselemente auch absolut sein.
Gemäß einem weiteren Aspekt der Erfindung ist ein Messgerät mit einer oben und im Folgenden beschriebenen Radar-Strahlablenkungseinheit angegeben.

Bei dem Messgerät kann es sich beispielsweise um ein Pulsradargerät oder ein FMCW-Messgerät (FMCW = Frequency Modulated Continuous Wave) handeln.
Das bzw. die Prismen können beispielsweise aus Teflon oder PE gefertigt sein. Denkbar sind aber auch Materialien mit anderem Brechungsindex. Auch können sie aus einem sog. Metamaterial gefertigt sein, das einen negativen Brechungsindex aufweist. In diesem Fall sind, bei entsprechendem Aufbau des Metamaterials, auch andere Ausführungsgeometrien der Strahlablenkungseinheit als in Form eines Prismas möglich.
Gemäß einer weiteren Ausführungsform der Erfindung weist das Messgerät eine Befestigungsvorrichtung zum Befestigen der Radar-Strahlablenkungseinheit an dem Messgerät auf.

Insbesondere kann vorgesehen sein, dass die (Radar-)Strahlablenkungseinheit am Gehäuse des Messgeräts und/oder an seiner Antenne befestigt ist. Auf diese Weise kann der Justageaufwand reduziert werden.
Insbesondere kann das Messgerät zum Bestimmen der Topologie eines Schüttguts ausgeführt sein. Dies wird dadurch ermöglicht, dass die Oberfläche des Schüttguts durch das Sendesignal abgescannt wird, indem das bzw. die Prismen rotieren.

Gemäß einem weiteren Aspekt der Erfindung ist die Verwendung eines oben und im Folgenden beschriebenen Messgeräts zur Bestimmung eines Volumenstroms eines Schüttguts, das sich auf einem Förderband befindet, angegeben.
Gemäß einem weiteren Aspekt der Erfindung ist die Verwendung eines oben und im Folgenden beschriebenen Messgeräts zur Bestimmung der Masse eines Schüttguts angegeben. Volumenstrom bzw. Masse werden jeweils mit Kenntnis der Topologie bestimmt.
Gemäß einem weiteren Aspekt der Erfindung ist ein Verfahren zum Bestimmen der Topologie eines Schüttguts angegeben, bei dem zunächst ein Sendesignal eines Füllstandmessgeräts in eine Hauptabstrahlrichtung einer Antennenanordnung ausgesendet wird. Bei dem Füllstandmessgerät handelt es sich um ein Füllstandsradar.
Daraufhin wird ein erstes Prisma um eine erste Rotationsachse rotiert, so dass die Hauptabstrahlrichtung des Sendesignals nach Durchlaufen des Prismas auf einer geschlossenen Bahn umläuft. Zusätzlich kann ein zweites Prisma um dieselbe Rotationsachse rotiert werden, entweder gleich- oder gegenläufig zur Rotationsrichtung des ersten Prismas. Die Rotationsgeschwindigkeiten können unterschiedlich sein, so dass die Hauptabstrahlrichtung des Sendesignals nach Durchlaufen beider Prismen auf einer komplizierten, beispielsweise spiralförmigen oder blütenförmigen Bahn läuft, die geschlossen sein kann.
Die Sendesignale werden an der Schüttgutoberfläche reflektiert und die reflektierten Signale durchlaufen wieder das Prisma, die Prismen und werden dann vom Füllstandmessgerät aufgenommen. Durch Auswertung der aufgenommenen, reflektierten Sendesignale kann dann die Topologie des Schüttguts berechnet werden.

Im Folgenden werden mit Verweis auf die Figuren Ausführungsbeispiele der Erfindung beschrieben.

### Kurze Beschreibung der Figuren

Fig. 1A zeigt eine Füllstandmessanordnung.
Fig. 1B zeigt eine weitere Füllstandmessanordnung.
Fig. 1C zeigt eine weitere Füllstandmessanordnung.
Fig. 1D zeigt eine Füllstandmessanordnung gemäß einem Ausführungsbeispiel der Erfindung.
Fig. 2 zeigt eine Füllstandmessanordnung gemäß einem weiteren Ausführungsbeispiel der Erfindung.
Fig. 3A zeigt eine Füllstandmessanordnung gemäß einem weiteren Ausführungsbeispiel der Erfindung.
Fig. 3B und 3C zeigen eine Füllstandmessanordnung gemäß einem weiteren Ausführungsbeispiel der Erfindung.
Fig. 4 zeigt einen möglichen Scanbereich, den das Sendesignal abtasten kann.
Fig. 5A bis 5F zeigen verschiedene Trajektorien oder Bahnen, auf denen sich die Hauptabstrahlrichtung des Sendesignals nach Durchlaufen der Prismen bewegen kann.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung wird insbesondere im Umfeld von Füllstandmessgeräten angewendet, wobei aber auch eine Anwendung im Bereich der Objektüberwachung oder der Massenstromerfassung möglich ist. Es kann als ein Kernaspekt der Erfindung angesehen werden, Verfahren zur Füllstandmessung, welche lediglich die Entfernung zu einem einzigen Punkt an einer Füllgutoberfläche bestimmen, derart zu erweitern, dass die Erfassung der Topologie einer Oberfläche möglich wird. Speziell in Schüttgutanwendungen können sich hierdurch wesentlich bessere Messergebnisse ergeben, unabhängig davon, auf welche Art und Weise die Topologiedaten in weiteren Berechnungsschritten ausgewertet werden sollen.

Für die zur Topologiebestimmung benötigte Veränderung der Hauptabstrahlrichtung des Sendesignals gibt es sowohl mechanische, optische als auch elektrische Ansätze.

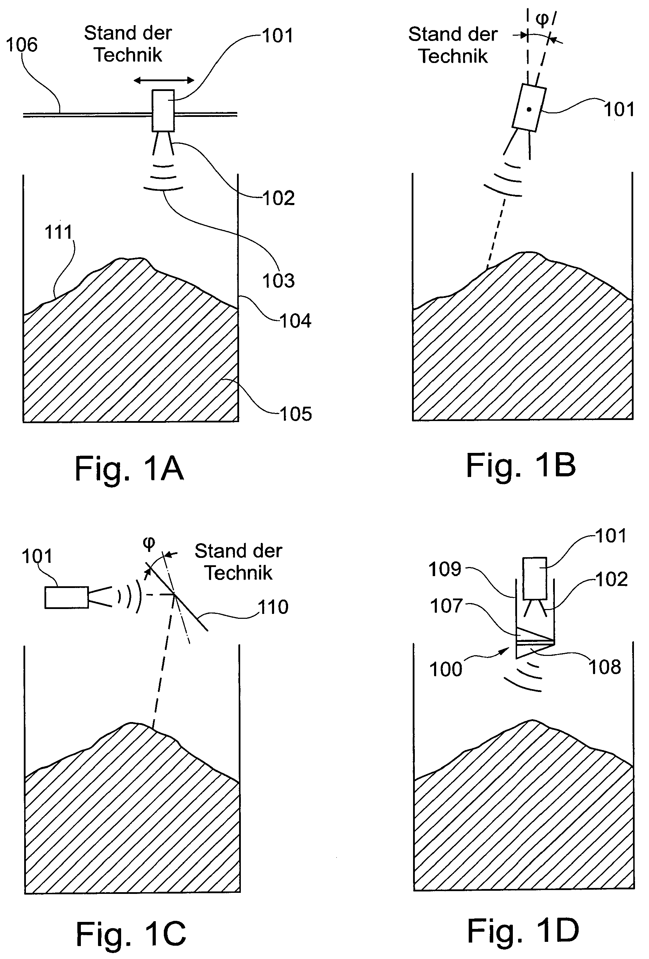

Eine mechanische Lösung lässt sich beispielsweise mittels einer verfahrbaren Antenne oder eines insgesamt verfahrbaren Füllstandmessgeräts realisieren, wie es in Fig. 1A abgebildet ist. Die nachträgliche Installation einer solchen Messvorrichtung in einen bereits bestehenden Behälter ist jedoch meist nicht durch die vorhandene Behälteröffnung möglich und erfordert einen großen, dem Messbereich äquivalenten Verfahrweg der Antenne.

Das Messgerät 101, bei dem es sich um ein Füllstandsradar handelt, weist eine Sendesignalabstrahleinrichtung, beispielsweise in Form einer Horn- oder Parabolantenne 102 auf. Das Sendesignal 103 wird in Richtung Füllgutoberfläche 111 abgestrahlt und dort zumindest teilweise reflektiert.
Das Füllgut 105, bei dem es sich beispielsweise um ein Schüttgut handeln kann, befindet sich typischerweise in einem Behälter 104 oder auf einem Transportband. Das von der Schüttgutoberfläche 111 zum Schüttgut 105 reflektierte Sendesignal wird dann vom Messgerät über die Antenne 102 aufgenommen und ausgewertet. Im Beispiel der Fig. 1A kann das Messgerät 101 entlang der horizontalen Führung 106 verschoben werden, so dass die Schüttgutoberfläche zumindest eindimensional abgescannt werden kann.
Eine weitere Möglichkeit, die Füllgutoberfläche abzuscannen, ist das mechanische Schwenken einer ansonsten ortfesten Antenne, wie es in Fig. 1B dargestellt ist. Als problematisch kann sich hier jedoch die mechanische Beanspruchung der für Versorgungsspannung und Signalübertragung benötigten Kabel der Antenne durch die erforderliche schnelle Rotation der Antenne erweisen.
Dies lässt sich durch die Entkopplung von Strahlerzeugung und mechanischer Ablenkung der Hauptstrahlrichtung umgehen, was beispielsweise durch eine feststehende Antenne und einen geeigneten schwenkbaren Spiegel 110 erreicht werden kann. Ein Beispiel hierfür ist in der Fig. 1C gezeigt. Durch die seitliche Anordnung des Spiegels ist eine kompakte Bauweise und die Installation durch eine beispielsweise nur 6 Zoll messende Behälteröffnung nicht möglich.

Eine rein elektrische Strahlablenkung lässt sich beispielsweise mit Patch-Array Antennen umsetzen. Dies ist jedoch mit hohem schaltungstechnischem Aufwand verbunden. Des Weiteren ist die hierbei erreichbare Strahlqualität (Fokussierung einschließlich Nebenkeulen) deutlich schlechter als beispielsweise die erreichbare Strahlqualität einer Cassegrain Antenne.

Gemäß einem Aspekt der Erfindung sind die Strahlerzeugung und die mechanische Ablenkung der Hauptstrahlrichtung unter Beibehaltung einer kompakten Bauform voneinander entkoppelt.

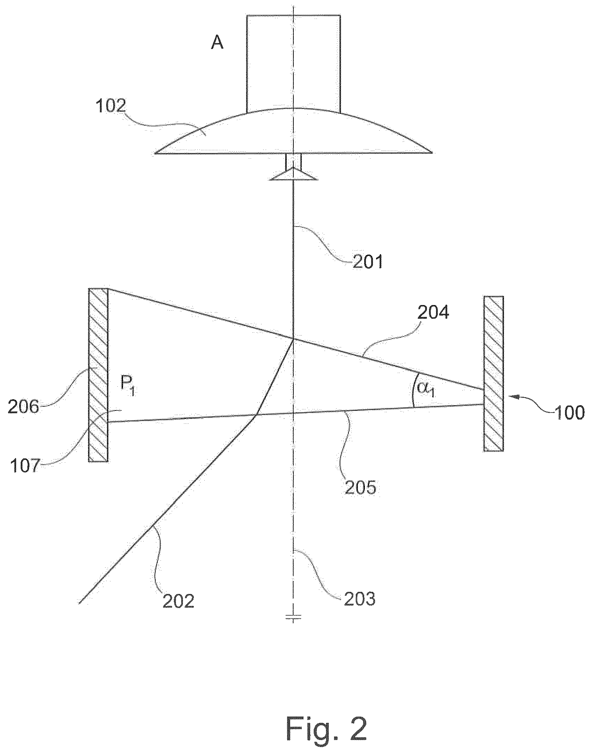

Die Figuren 1D und 2 zeigen zwei Ausführungsbeispiele der Erfindung. Dabei handelt es sich um eine Anordnung von einem Füllstandmessgerät 101 (beispielsweise ein Füllstandradar) mit einer Antenne (A) 102 und mindestens einem Strahlablenkungselement (P₁) 107, 108, beispielsweise in Form eines Prismas, welches sich in Hauptstrahlrichtung 201 der Antenne 102 befindet.

Das Prisma weist den Winkel α₁ zwischen den beiden brechenden Flächen 204, 205 auf und ist aus mindestens einem Material (M₁), beispielsweise PTFE (Teflon), gefertigt. Durch Verwendung weiterer Materialien, beispielsweise für eine Oberflächenvergütung, mit von M₁ abweichenden Eigenschaften lassen sich zusätzliche Eigenschaften wie Reflektions- und Transmissions-Eigenschaften oder die chromatische Aberration des Strahlablenkungselements beeinflussen.

Mittels eines geeigneten Antriebes lässt sich das Strahlablenkungselement P₁ gegenüber der Antenne 102 entlang der Hauptstrahlrichtung verdrehen und so deren Hauptstrahlrichtung entsprechend der unterschiedlich langen optischen Laufwege im Strahlablenkungselement auf einen Kegelmantel ablenken. Der Kegelwinkel ist dabei von dem Prismenwinkel α₁ abhängig.

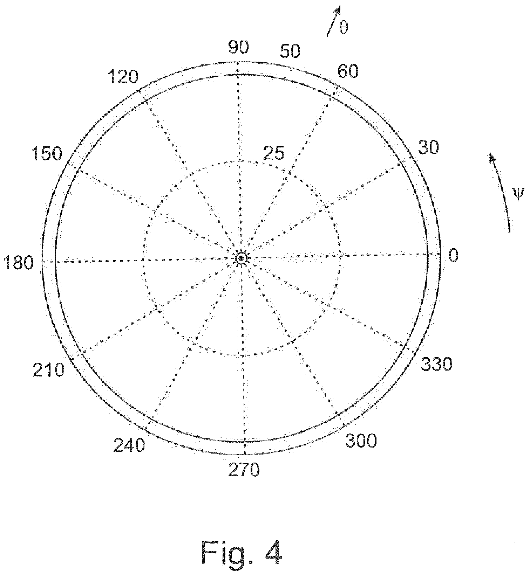

Fig. 4 zeigt den dadurch erreichbaren Scanbereich. Wie in Fig. 4 zu sehen ist, kann der Azimuthwinkel Ψ 0 bis 360 Grad einnehmen. Der Nickwinkel Θ kann beispielsweise 0 bis 50 Grad betragen, je nach Wahl des Materials, aus dem die Prismen gefertigt sind, und α₁ und α₂.

Das bzw. die Prismen 107, 108 können sich in einem gemeinsamen Gehäuse 109 befinden, welches über das Gehäuse des Messgeräts 101 und dessen Antenne 102 gestülpt wird. Somit kann die Strahlablenkungseinheit 100 direkt an dem Gehäuse des Messgeräts 101 und/oder dessen Antenne 102 befestigt werden. Insbesondere können das Gehäuse des Messgeräts 101 und das Gehäuse 109 der Strahlablenkungseinheit 100 integral ausgeführt sein.

Fig. 2 zeigt ein Ausführungsbeispiel, bei dem die Antenne als Parabolantenne 102 ausgeführt ist. Das Bezugszeichen 201 zeigt die Hauptabstrahlrichtung des Sendesignals direkt nach Verlassen der Antenne. Die Hauptabstrahlrichtung liegt auf der Hauptachse 203 des ersten Prismas. Trifft das Sendesignal auf die erste optisch wirksame Oberfläche 204 des ersten Prismas 107, wird sie von der Hauptachse 203 des ersten Prismas 107 weggebrochen. Danach trifft das Sendesignal auf die zweite optisch wirksame Oberfläche 205 des Prismas und wird noch einmal von der Hauptachse 203 des Prismas weggebrochen (siehe Strahlrichtung 202).

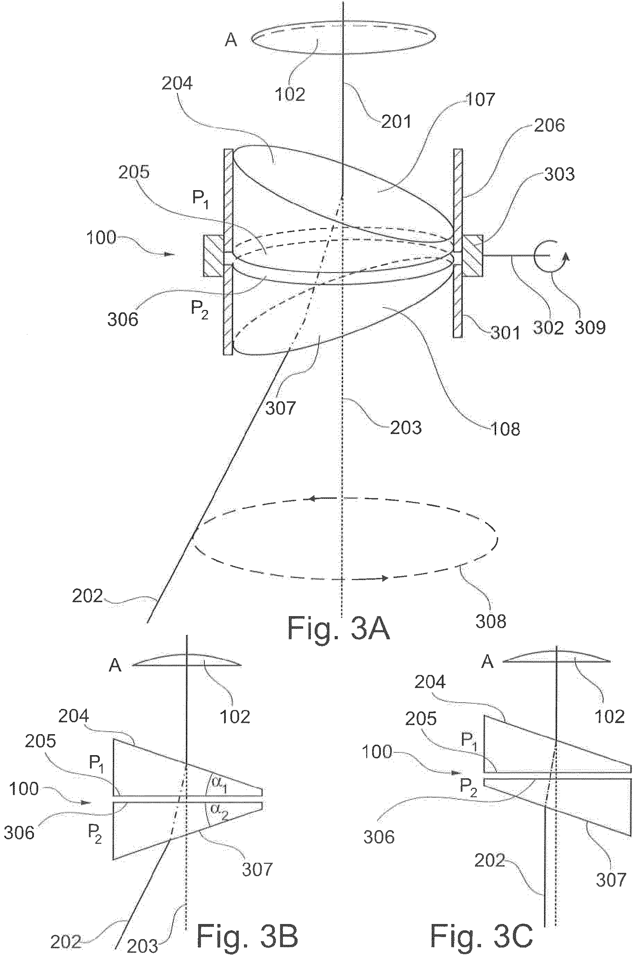

Das Prisma 107 kann von einer Antriebseinheit 206, bei dem es sich beispielsweise um einen Torquemotor handelt, in Rotation um die Hauptachse 203 versetzt werden. Fig. 3A zeigt die Anordnung von zwei Prismen 107, 108, ähnlich wie in der Fig. 1D. Die der Antenne 102 zugewandte, optisch wirksame Oberfläche 204 des ersten Prismas 107 weist einen Winkel α₁ zur Rotationsachse 203 der beiden Prismen auf, der ungleich 90 Grad ist, so dass das Sendesignal von der optischen Achse 203 weggebrochen wird, wenn es die erste Oberfläche 204 durchdringt. Die zweite, hintere Oberfläche 205 des ersten Prismas hingegen ist senkrecht zur Rotationsachse 203 ausgerichtet, ebenso die erste, dieser Oberfläche gegenüberliegende Oberfläche 306 des zweiten Prismas 108. Insgesamt ändert sich demnach die Hauptabstrahlrichtung des Sendesignals nicht, wenn das Sendesignal vom ersten Prisma in das zweite Prisma wandert, insbesondere wenn der Abstand zwischen beiden Prismen klein genug ist.

Die hintere, zweite optisch aktive Oberfläche 307 des zweiten Prismas 108 weist einen Winkel α₂ zur Hauptachse 203 der beiden Prismen auf, so dass sich die Hauptabstrahlrichtung bei Austritt des Sendesignals aus dem zweiten Prisma noch einmal ändert.

Beide Prismen können verschiedene Antriebe 206, 301 aufweisen, die unabhängig voneinander angesteuert und betrieben werden können. Das zweite Prisma kann aber auch beispielsweise durch ein Getriebe mit dem Antrieb des ersten Prismas gekoppelt sein, so dass das Verhältnis der Rotationsfrequenzen der beiden Prismen fest vorgegeben ist.

Weiter kann eine dritte Antriebseinheit 303 vorgesehen sein, welche es ermöglicht, dass beide Prismen um die zur Hauptachse 203 senkrecht stehende Achse 302 gedreht werden können (vgl. Pfeil 309). In diesem Fall kann ein nicht radialsymmetrisches Scanmuster erzeugt werden.

Durch die Rotation der beiden Prismen um die Hauptachse 203 wird erreicht, dass sich die Hauptabstrahlrichtung 202 nach Durchlaufen der beiden Prismen beispielsweise auf einer Kreisbahn 308 bewegt. Dies ist dann der Fall, wenn beide Prismen mit derselben Rotationsfrequenz in dieselbe Richtung gedreht werden.

Allerdings können die beiden Prismen auch entgegengesetzt zueinander oder/und mit unterschiedlichen Frequenzen rotiert werden. Ein Beispiel für die beiden Extremstellungen der Prismen und die daraus resultierende Strahlablenkung ist in den Figuren 3B und 3C abgebildet.

Im Fall der Fig. 3B, in dem die erste Oberfläche 204 des ersten Prismas und die zweite Oberfläche 307 des zweiten Prismas den Winkel α₁ + α₂ zueinander aufweisen, der ungleich 0 Grad ist, wird das Sendesignal maximal in Richtung 202 von der Hauptachse 203 weggebrochen.

Im Fall der Fig. 3C hingegen sind die Oberseiten 204, 307 des ersten Prismas und des zweiten Prismas parallel zueinander angeordnet. Die beiden anderen Seiten 205, 306 sind ebenfalls parallel zueinander angeordnet, wie dies im Übrigen auch in den Ausführungsbeispielen der Figuren 1D, 3A und 3B vorgesehen ist.

Daraus ergibt sich, dass die Richtung 202 des Sendesignals nach Durchlaufen der beiden Prismen parallel aber versetzt zur Hauptachse 203 der beiden Prismen verläuft.

Durch Kombination mit einem zweiten solchen Prisma (P₂) (vgl. Figur 3A) lässt sich ein weiterer Ablenk-Freiheitsgrad gewinnen. Fig. 3B zeigt die maximal mögliche Ablenkung. Hierbei sind die beiden Strahlablenkungselemente identisch ausgerichtet, also um 0° gegeneinander verdreht. Stehen beide Strahlablenkungselemente einander gegenüber (vgl. Figur 3C) ergibt sich demnach lediglich ein paralleler Strahlenversatz, jedoch keine Winkelablenkung der Hauptstrahlrichtung der Antenne A.

Durch eine gekoppelte Rotation der beiden Prismen, welche beispielsweise über ein Planetengetriebe erreicht werden könnte, lässt sich ein Spiralscan verwirklichen. Die genaue Form des Scans wird hierbei über das Übersetzungsverhältnis des Getriebes eingestellt. Während das der Antenne zugewandte Prisma P₁, m₁-mal rotiert, macht das Prisma P₂ m₂-Umdrehungen. Somit ergibt sich für das Übersetzungsverhältnis des Getriebes m=m₁/m₂.

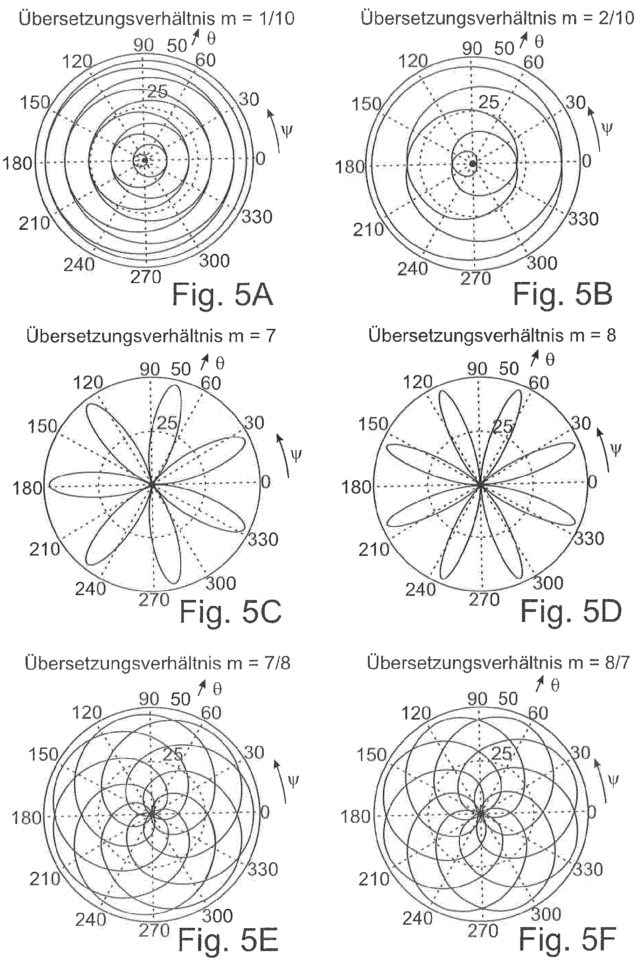

Kleine, rationale Verhältnisse ergeben spiralförmige Scanmuster, wie sie in den Polardarstellungen in Fig. 5A und 5B gezeigt werden. Hierbei ist der Nickwinkel Θ des gegenüber der Hauptstrahlrichtung abgelenkten Strahles über dem Azimuthwinkel Ψ (auch Gierwinkel genannt) aufgetragen. Ganzzahlige Verhältnisse erzeugen propellerformige Scanfiguren (s. Fig. 5C und 5D), während rationale Verhältnisse nahe 1 blütenförmige Scanmuster (s. Fig. 5E und 5F) ergeben.

Darüber hinaus können aber auch jegliche andere Übersetzungsverhältnisse, oder auch eine entkoppelte Bewegung der beiden Strahlablenkungselemente vorgesehen sein. Blütenförmige Scanmuster können hierbei von Vorteil sein, da diese die zu untersuchende Fläche verhältnismäßig gleichmäßig mit Messpunkten abdecken.

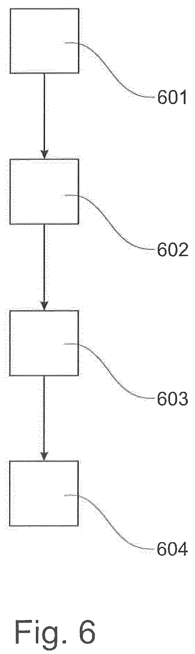

Fig. 6 zeigt ein Flussdiagramm eines Verfahrens gemäß einem Ausführungsbeispiel der Erfindung.

In Schritt 601 wird ein Sendesignal von einem Messgerät in Richtung Füllgutoberfläche ausgesendet. In Schritt 602 durchläuft das Sendesignal mindestens ein Prisma, welches um seine Hauptachse rotiert, so dass die Hauptabstrahlrichtung des Sendesignals zyklisch abgelenkt wird. Das Sendesignal wird daraufhin von der Füllgutoberfläche reflektiert, durchläuft wieder das mindestens eine Prisma auf seinem Weg zurück zum Füllstandmessgerät. In Schritt 603 wird das reflektierte Sendesignal vom Füllstandmessgerät aufgenommen und ausgewertet, um daraus dann in Schritt 604 die Topologie der Füllgutoberfläche zu bestimmen.

## Patentansprüche

1. Radar-Strahlablenkungseinheit (100) für ein Füllstandradar (101) mit einer Antennenanordnung (102) zum gesteuerten Ablenken (202) einer Hauptabstrahlrichtung (201) der Antennenanordnung (102) eines Sendesignals des Füllstandradars, aufweisend:
ein erstes Prisma (107) zum Ablenken der Hauptabstrahlrichtung des Sendesignals;
einen ersten Antrieb (206) zum Rotieren des ersten Prismas um eine erste Rotationsachse, so dass die Hauptabstrahlrichtung des Sendesignals nach Durchlaufen des ersten Prismas auf einer geschlossenen Bahn umläuft;
ein zweites Prisma (108) zum Ablenken der Hauptabstrahlrichtung des Sendesignals;
einen zweiten Antrieb (301) zum Rotieren des zweiten Prismas um eine zweite Rotationsachse, so dass die Hauptabstrahlrichtung des Sendesignals nach Durchlaufen des zweiten Prismas auf einer geschlossenen Bahn umläuft;
wobei das Verhältnis der Rotationsfrequenz des ersten Prismas zur Rotationsfrequenz des zweiten Prismas eingestellt ist.

2. Radar-Strahlablenkungseinheit (100) nach Anspruch 1,
wobei die Rotationsachsen des ersten Prismas (107) und des zweiten Prismas (108) zusammenfallen.

3. Radar-Strahlablenkungseinheit (100) nach einem der vorhergehenden Ansprüche, weiter aufweisend:
einen dritten Antrieb (303) zum Rotieren des ersten Prismas (107) und/oder des zweiten Prismas (108) um eine dritte Rotationsachse, die senkrecht auf der ersten und der zweiten Rotationsachse steht.

4. Radar-Strahlablenkungseinheit (100) nach einem der vorhergehenden Ansprüche,
wobei das erste Prisma (107) eine erste optisch wirksame Oberfläche (204) und eine zweite optisch wirksame Oberfläche (205) aufweist, die einen Winkel zueinander eischließen, der die Ablenkung der Hauptabstrahlrichtung bestimmt.

5. Radar-Strahlablenkungseinheit (100) nach einem der vorhergehenden Ansprüche,
wobei der erste Antrieb (206) und der zweite Antrieb (301) als mechanisch gekoppelter Antrieb ausgeführt sind.

6. Messgerät (101) mit einer Radar-Strahlablenkungseinheit (100) nach einem der Ansprüche 1 bis 5.

7. Messgerät (101) nach Anspruch 6, aufweisend:
eine Befestigungsvorrichtung (109) zum Befestigen der Radar-Strahlablenkungseinheit (100) an dem Messgerät.

8. Messgerät (101) nach Anspruch 6 oder 7,
wobei das Messgerät als Pulsradargerät oder FMCW-Messgerät ausgeführt ist.

9. Messgerät (101) nach einem der Ansprüche 6 bis 8 zum Bestimmen der Topologie eines Schüttguts.

10. Verwendung eines Messgeräts nach einem der Ansprüche 6 bis 9 zur Bestimmung eines Volumenstroms eines Schüttguts, das sich auf einem Förderband befindet.

11. Verwendung eines Messgeräts nach einem der Ansprüche 6 bis 9 zur Bestimmung der Masse eines Schüttguts.

12. Verfahren zum Bestimmen der Topologie eines Schüttguts, aufweisend die Schritte:
Aussenden eines Sendesignals eines Füllstandradars in eine Hauptabstrahlrichtung einer Antennenanordnung;
Ablenken der Hauptabstrahlrichtung des Sendesignals;
Rotieren eines ersten Prismas um eine erste Rotationsachse, so dass die Hauptabstrahlrichtung des Sendesignals nach Durchlaufen des ersten Prismas auf einer geschlossenen Bahn umläuft;
Rotieren eines zweiten Prismas um eine zweite Rotationsachse, so dass die Hauptabstrahlrichtung des Sendesignals nach Durchlaufen des zweiten Prismas auf einer geschlossenen Bahn umläuft;
Einstellen eines Verhältnisses der Rotationsfrequenz des ersten Prismas zur Rotationsfrequenz des zweiten Prismas;
Bestimmen der Topologie des Schüttguts durch Auswertung des an der Schüttgutoberfläche reflektierten Sendesignals.

## Claims

1. Radar beam deflection unit (100) for a radar level indicator (101), comprising an antenna array (102) for the controlled deflection (202) of a main radiation direction (201) of the antenna arrangement (102) of a transmission signal from the radar level indicator, comprising:
a first prism (107) for deflecting the main radiation direction of the transmission signal;
a first drive (206) for rotating the first prism about a first axis of rotation so that the main radiation direction of the transmission signal follows a closed path after passing through the first prism;
a second prism (108) for deflecting the main radiation direction of the transmission signal;
a second drive (301) for rotating the second prism about a second axis of rotation so that the main radiation direction of the transmission signal follows a closed path after passing through the second prism;
wherein the ratio of the rotation frequency of the first prism with respect to the rotation frequency of the second prism is adjusted.

2. Radar beam deflection unit (100) according to claim 1,
wherein the axis of rotation of the first prism (107) and the axis of rotation of the second prism (108) coincide.

3. Radar beam deflection unit (100) according to either of the preceding claims, further comprising:
a third drive (303) for rotating the first prism (107) and/or the second prism (108) about a third axis of rotation that is perpendicular to the first axis of rotation and the second axis of rotation.

4. Radar beam deflection unit (100) according to any of the preceding claims, wherein the first prism (107) has a first optical surface (204) and a second optical surface (205) which enclose an angle that defines the deflection of the main radiation direction.

5. Radar beam deflection unit (100) according to any of the preceding claims, wherein the first drive (206) and the second drive (301) are designed as a mechanically coupled drive.

6. Measuring instrument (101) comprising a radar beam deflection unit (100) according to any of claims 1 to 5.

7. Measuring instrument (101) according to claim 6, comprising:
an attachment device (109) for attaching the radar beam deflection unit (100) to the measuring instrument.

8. Measuring instrument (101) according to either claim 6 or claim 7,
wherein the measuring instrument is designed as a pulse radar instrument or FMCW measuring instrument.

9. Measuring instrument (101) according to any of claims 6 to 8 for determining the topology of a bulk material.

10. Use of a measuring instrument according to any of claims 6 to 9 for determining a volume flow rate of a bulk material located on a conveyor belt.

11. Use of a measuring instrument according to any of claims 6 to 9 for determining the mass of a bulk material.

12. Method for determining the topology of a bulk material, comprising the steps of:
transmitting a transmission signal from a radar level indicator in a main radiation direction of an antenna arrangement;
deflecting the main radiation direction of the transmission signal;
rotating a first prism about a first axis of rotation so that the main radiation direction of the transmission signal follows a closed path after passing through the first prism;
rotating a second prism about a second axis of rotation so that the main radiation direction of the transmission signal follows a closed path after passing through the second prism;
adjusting a ratio of the rotation frequency of the first prism to the rotation frequency of the second prism;
determining the topology of the bulk material by analysing the transmission signal reflected at the bulk-material surface.

## Revendications

1. Unité de déviation de faisceau radar (100) pour un radar de niveau (101) avec un agencement d'antenne (102) pour la déviation contrôlée (202) d'une direction de rayonnement principale (201) de l'agencement d'antenne (102) d'un signal d'émission du radar de niveau, comprenant :
un premier prisme (107) pour la déviation de la direction de rayonnement principale du signal d'émission ;
un premier entraînement (206) pour la rotation du premier prisme autour d'un premier axe de rotation, de sorte que la direction de rayonnement principale du signal d'émission tourne sur une orbite fermée après le passage au travers du premier prisme ;
un second prisme (108) pour la déviation de la direction de rayonnement principale du signal d'émission ;
un deuxième entraînement (301) pour la rotation du second prisme autour d'un deuxième axe de rotation, de sorte que la direction de rayonnement principale du signal d'émission tourne sur une orbite fermée après le passage au travers du second prisme ;
le rapport de la fréquence de rotation du premier prisme sur la fréquence de rotation du second prisme étant réglé.

2. Unité de déviation de faisceau radar (100) selon la revendication 1,
les axes de rotation du premier prisme (107) et du second prisme (108) étant en coïncidence.

3. Unité de déviation de faisceau radar (100) selon l'une des revendications précédentes, comprenant en outre :
un troisième entraînement (303) pour la rotation du premier prisme (107) et/ou du second prisme (108) autour d'un troisième axe de rotation, perpendiculaire au premier et au deuxième axe de rotation.

4. Unité de déviation de faisceau radar (100) selon l'une des revendications précédentes,
le premier prisme (107) présentant une première surface optique active (204) et une seconde surface optique active (205), lesquelles forment entre elles un angle qui définit la déviation de la direction de rayonnement principale.

5. Unité de déviation de faisceau radar (100) selon l'une des revendications précédentes,
le premier entraînement (206) et le second entraînement (301) étant réalisés sous forme d'entraînement couplé mécaniquement.

6. Appareil de mesure (101) avec une unité de déviation de faisceau radar (100) selon l'une des revendications 1 à 5.

7. Appareil de mesure (101) selon la revendication 6, comprenant :
un dispositif de fixation (109) pour la fixation de l'unité de déviation de faisceau radar (100) sur l'appareil de mesure.

8. Appareil de mesure (101) selon l'une des revendications 6 et 7,
l'appareil de mesure étant réalisé sous forme d'appareil radar pulsé ou d'appareil de mesure FMCW.

9. Appareil de mesure (101) selon l'une des revendications 6 à 8, destiné à la détermination de la topologie d'une charge.

10. Utilisation d'un appareil de mesure selon l'une des revendications 6 à 9 pour la détermination d'un débit volumique d'une charge, située sur un tapis roulant.

11. Utilisation d'un appareil de mesure selon l'une des revendications 6 à 9, pour la détermination de la masse d'une charge.

12. Procédé de détermination de la topologie d'une charge, comprenant les étapes :
émission d'un signal d'un radar de niveau dans une direction de rayonnement principale d'un agencement d'antenne ;
déviation de la direction de rayonnement principale du signal d'émission ;
rotation d'un premier prisme autour d'un premier axe de rotation, de sorte que la direction de rayonnement principale du signal d'émission tourne sur une orbite fermée après le passage au travers du premier prisme ;
rotation d'un second prisme autour d'un deuxième axe de rotation, de sorte que la direction de rayonnement principale du signal d'émission tourne sur une orbite fermée après le passage au travers du second prisme ;
réglage d'un rapport de la fréquence de rotation du premier prisme sur la fréquence de rotation du second prisme ;
détermination de la topologie de la charge par évaluation du signal d'émission réfléchi sur la surface de la charge.
